# EUROPEAN PATENT APPLICATION

(11) **EP 4 621 562 A1**
(43) Date of publication of application: **24.09.2025**
(21) Application number: 23891416.2
(22) Date of filing: 07.11.2023
(51) Int. Cl.: G06F 8/654, G05B 19/042

(54) **UPDATE ASSISTANCE DEVICE, UPDATE ASSISTANCE METHOD, UPDATE ASSISTANCE PROGRAM, AND FIELD APPARATUS**

(30) Priority: 17.11.2022 JP 2022184283
(71) Applicant: Yokogawa Electric Corporation, Tokyo 180-8750 (JP)
(72) Inventor: KAMADUKA Takashi, Musashino-shi, Tokyo 180-8750 (JP); TANAKA Hidekazu, Musashino-shi, Tokyo 180-8750 (JP)
(74) Representative: Hoffmann Eitle
(86) International application number: PCT/JP2023/039990
(87) International publication number: WO 2024/106264

(57) **Abstract**

There is provided an update assistance device including: an update software storage unit which stores update software for updating target software that is executed in a target device; a division unit which divides the update software into a plurality of blocks such that each block is smaller than or equal to a free space of a working memory which is used as a work region for updating the target software; and a supply unit which supplies the update software to the working memory on a block-by-block basis.

## Description

### BACKGROUND

### 1. TECHNICAL FIELD

The present invention relates to an update assistance device, an update assistance method, an update assistance program, and a field apparatus.

### 2. RELATED ART

Patent Document 1 describes that "a minimum unit revision number is set". Patent Document 2 describes that "when all field apparatuses are not ready for memory updates... the transfer of update data is started".

Patent Document 3 describes that "when it is detected that no field apparatus currently prepares for the memory updating... update data is transferred". Patent Document 4 describes "performing an arrangement change of a program for each of the divided regions to which a CPU has not performed access".

### Prior Art Documents

### Patent Document

Patent Document 1: Japanese Patent Application Publication No. 2004-295299
Patent Document 2: Japanese Patent Application Publication No. 2005-135223
Patent Document 3: Japanese Patent Application Publication No. 2005-173747
Patent Document 4: Japanese Patent Application Publication No. 2005-182106

### General Disclosure

In a first aspect of the present invention, provided is an update assistance device. The update assistance device includes: an update software storage unit which stores update software for updating target software that is executed in a target device; a division unit which divides the update software into a plurality of blocks such that each block is smaller than or equal to a free space of a working memory which is used as a work region for updating the target software; and a supply unit which supplies the update software to the working memory on a block-by-block basis.

The update assistance device may further include a determination unit which determines whether a partial update of the target software by using an update target block among the plurality of blocks is completed, in which when it is determined that the partial update of the target software by using the update target block is completed, the supply unit may supply the working memory with a next update target block among the plurality of blocks.

Any of the update assistance devices may further include a capacity information acquisition unit which acquires capacity information indicating a free space of the working memory, in which the division unit may divide the update software into the plurality of blocks based on the capacity information.

The target device may include a non-volatile memory which stores the target software, the working memory, and a CPU which executes update processing for the target software, and any of the update assistance devices may further include an instruction unit which instructs the CPU of the target device to partially update the target software.

In any of the update assistance devices, the instruction unit may instruct the CPU of the target device to write an update target block to the working memory.

In any of the update assistance devices, the instruction unit may instruct the CPU of the target device to update the target software by using an update target block supplied to the working memory.

The update software may be software for updating a plurality of pieces of target software for which a plurality of working memories different from each other are set as work regions, and which are respectively updated, and in any of the update assistance devices, the division unit may divide the update software into the plurality of blocks such that each block is smaller than or equal to a free space of a corresponding working memory among the plurality of working memories, and the supply unit may supply the update software to each of the corresponding working memories on a block-by-block basis.

Any of the update assistance devices may further include a pre-update software acquisition unit which acquires, from the target device, pre-update software indicating the target software before the update; a pre-update software storage unit which stores the pre-update software; and a return unit which returns the pre-update software to the target device, when the update of the target software by using the update software is not successful.

Any of the update assistance devices may further include an update software acquisition unit which acquires the update software via a computer network.

In any of the update assistance devices, a function of the update software storage unit may be provided by a storage device which is attachable and detachable.

In any of the update assistance devices, the supply unit may supply the update software to the working memory via a computer network.

In a second aspect of the present invention, provided is a field apparatus. The field apparatus includes any of the update assistance devices.

The field apparatus may further include the target device; and a relay device to which the target device and the update assistance device are attached, and which relays a communication between the target device and the update assistance device.

In a third aspect of the present invention, provided is an update assistance method. The update assistance method includes: by a computer, storing update software for updating target software that is executed in a target device; dividing the update software into a plurality of blocks such that each block is smaller than or equal to a free space of a working memory which is used as a work region for updating the target software; and supplying the update software to the working memory on a block-by-block basis.

In a fourth aspect of the present invention, provided is an update assistance program. The update assistance program which, when executed by a computer, causes the computer to function as: an update software storage unit which stores update software for updating target software that is executed in a target device; a division unit which divides the update software into a plurality of blocks such that each block is smaller than or equal to a free space of a working memory which is used as a work region for updating the target software; and a supply unit which supplies the update software to the working memory on a block-by-block basis.

The summary clause does not necessarily describe all necessary features of the embodiments of the present invention. The present invention may also be a sub-combination of the features described above.

### BRIEF DESCRIPTION OF THE DRAWINGS

Fig. 1 shows an example of a configuration diagram of an apparatus 10 in which an update assistance device 200 according to the present embodiment may be used.
Fig. 2 shows an example of a block diagram of the update assistance device 200 according to the present embodiment.
Fig. 3 shows an example of a flow diagram of an update assistance method which may be executed by the update assistance device 200 according to the present embodiment.
Fig. 4 shows a modified example of a configuration diagram of the apparatus 10 in which the update assistance device 200 according to the present embodiment may be used.
Fig. 5 shows an example of update software according to a modified example.
Fig. 6 shows an example of a block diagram of the update assistance device 200 according to another embodiment.
Fig. 7 shows another example of the configuration diagram of the update assistance device 200 according to the present embodiment.
Fig. 8 shows an example of an update assistance system in which the update assistance device 200 according to the present embodiment may be used.
Fig. 9 shows an example of a computer 9900 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

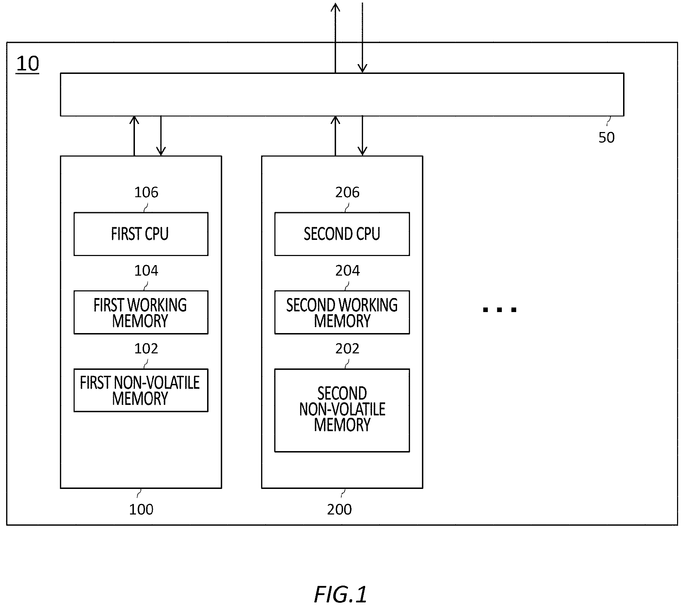

Fig. 1 shows an example of a configuration diagram of an apparatus 10 in which an update assistance device 200 according to the present embodiment may be used. The apparatus 10 may include a variety of apparatuses used in a variety of facilities. Such a facility may be, as an example, a plant. Examples of the plant may include a plant for managing and controlling wells such as a gas field and an oil field and surroundings thereof, a plant for managing and controlling hydroelectric, thermo electric and nuclear power generations and the like, a plant for managing and controlling environmental power generation such as solar power and wind power, a plant for managing and controlling water and sewerage, a dam, and the like, etc., in addition to chemical and bio industrial plants and the like. The apparatus 10 may be a field apparatus, such as a thermometer, a differential pressure /pressure gauge, a flow meter, and a valve/positioner, which are installed in such a plant. In the following description, a case will be described as an example in which the apparatus 10 is the field apparatus; however, the present invention is not limited thereto.

In the apparatus 10, a program of an arithmetic portion for converting a signal from a sensor into an output signal, configuration information constituting network information, or the like is stored in a non-volatile memory such as an EPROM (Erasable Programmable Read Only Memory), Flash ROM, or an EEPROM (Electrically EPROM).

In recent years, as a distribution of functions is promoted for the purpose of improving a process, or the like, the apparatus 10 is also required to have an additional function, such as an extension of a self-diagnosis function. In addition, due to the function being increased, a possibility of a bug occurring becomes high. Therefore, there are a growing number of opportunities to update software for a program, configuration information, or the like that is stored inside the apparatus 10. This trend is also seen in various apparatuses other than the field apparatus.

Therefore, it is conceivable that such an apparatus 10 is caused to be compatible with a communication standard such as PROFINET (Process Field Net) and Ethernet (registered trademark), and a communication function of a fieldbus is used for the software, which is stored inside the apparatus 10, to be updated.

In the related art, in such a case, update software is downloaded to a non-volatile memory, and a CPU uses a working memory as a work region to update the software that is stored inside the apparatus 10.

However, when a free space is not sufficient in the non-volatile memory, the apparatus 10 cannot download the update software. In addition, even when the update software can be downloaded, in a case where a free space of the working memory is not sufficient, the CPU cannot execute update processing for the software. Such a problem is highly likely to occur in an apparatus, such as the field apparatus, on which a memory of comparatively small capacity is mounted.

Therefore, in view of such a problem, the update assistance device 200 according to the present embodiment divides the update software into a plurality of blocks and supplies the update software to the working memory on a block-by-block basis, thereby assisting in updating the software that is stored inside the apparatus 10.

The apparatus 10 includes a relay device 50, a target device 100, and the update assistance device 200. It should be noted that the present figure shows a case as an example in which the apparatus 10 includes only the relay device 50, the target device 100, and the update assistance device 200; however, the apparatus 10 may include another device not shown.

The target device 100 and the update assistance device 200 are attached to the relay device 50, which relays a communication between the target device 100 and the update assistance device 200. In this case, the target device 100 and the update assistance device 200 may be attached to the relay device 50 in an attachable and detachable manner. In addition, the relay device 50 may be configured to be compatible with a communication standard such as PROFINET and Ethernet, and to be capable of connecting the apparatus 10 to a computer network. As an example, the relay device 50 may be a base board; and may have a plurality of slots to which the plurality of boards are attachable and detachable, and a LAN port into which an Ethernet cable is able to be inserted. It should be noted that when the apparatus 10 is able to be connected to the computer network wirelessly, the apparatus 10 may not have the LAN port.

The target device 100 is a device on which target software as an update target is executed. As an example, the target device 100 may be a first board that is attached, in the attachable and detachable manner, to a first slot of the relay device 50 that is a base board. The target device 100 includes a first non-volatile memory 102, a first working memory 104, and a first CPU 106.

The first non-volatile memory 102 is a memory which can retain data even without a power supply. As an example, the first non-volatile memory 102 may be a ROM from which information is only able to be read, such as an EPROM, a Flash ROM, or an EEPROM. The first non-volatile memory 102 may store at least the target software as an update target (for example, a program of an arithmetic portion for converting a signal from a sensor into an output signal, or configuration information constituting network information).

The first working memory 104 is a memory which is used as a work region when the first CPU 106 executes some processing. As an example, the first working memory 104 may be a RAM (Random Access Memory) from which information is able to be read and written. The first working memory 104 may be used at least as a work region for the first CPU 106 to update the target software.

The first CPU 106 is an arithmetic processing device which controls another element or circuit, calculates data, or the like. The first CPU 106 sets the first working memory 104 as a work region to execute various types of processing. The first CPU 106 may at least set the first working memory 104 as a work region, and execute the update processing for the target software that is stored in the first non-volatile memory 102.

In this way, the target device 100 may include the non-volatile memory (the first non-volatile memory 102) which stores the target software; the working memory (the first working memory 104) which is used as a work region for updating the target software; and the CPU (the first CPU 106) which executes the update processing for the target software.

The update assistance device 200 assists in updating the target software in the target device 100. As an example, the update assistance device 200 may be a second board that is attached, in the attachable and detachable manner, to a second slot of the relay device 50 that is a base board. The update assistance device 200 includes a second non-volatile memory 202, a second working memory 204, and a second CPU 206.

The second non-volatile memory 202, the second working memory 204, and the second CPU 206 may be elements similar to the first non-volatile memory 102, the first working memory 104, and the first CPU 106, and thus the descriptions will be omitted here except for differences; however, in view of the above-described problems, it is preferable that the capacity of the second non-volatile memory 202 is greater than the capacity of the first non-volatile memory 102.

In this way, the apparatus 10 including the update assistance device 200 according to the present embodiment, in particular, the field apparatus may be provided. In addition, the field apparatus may further include the target device 100; and the relay device 50 to which the target device 100 and the update assistance device 200 are attached, and which relays a communication between the target device 100 and the update assistance device 200. The function of the update assistance device 200 which assists in updating the target software in such an apparatus 10 will be described in detail below.

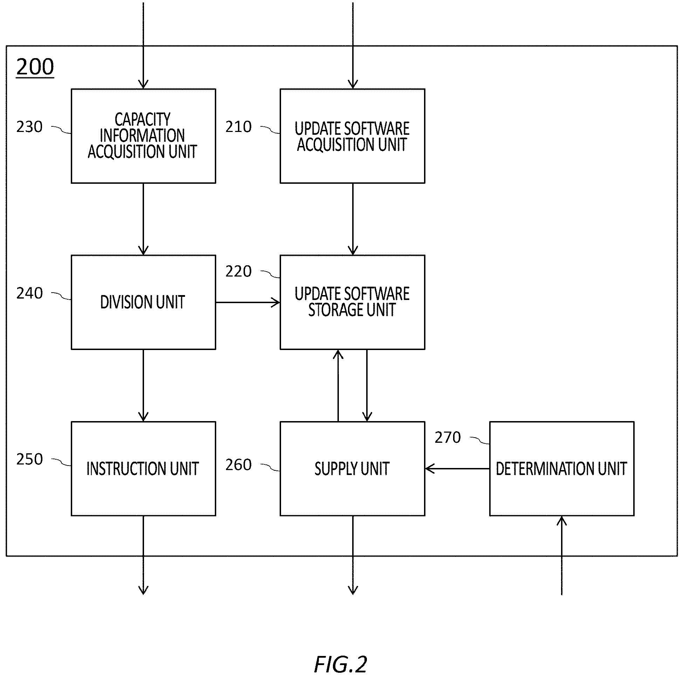

Fig. 2 shows an example of a block diagram of the update assistance device 200 according to the present embodiment. It should be noted that these blocks are functional blocks that are functionally separated, respectively, and do not necessarily need to match with actual device configurations. That is, in the present figure, even when an element is indicated by one block, a function thereof may not be necessarily provided by one element. In addition, in the present figure, even when elements are indicated by separate blocks, functions thereof may not be necessarily provided by the separate elements. The same applies to subsequent block diagrams.

The update assistance device 200 may include an update software acquisition unit 210, an update software storage unit 220, a capacity information acquisition unit 230, a division unit 240, an instruction unit 250, a supply unit 260, and a determination unit 270.

The update software acquisition unit 210 acquires the update software via the computer network. The update software acquisition unit 210 supplies the acquired update software to the update software storage unit 220. The function of such an update software acquisition unit 210 may be provided by, for example, the second CPU 206 and a communication unit (not shown).

The update software storage unit 220 stores the update software for updating the target software that is executed in the target device 100. The function of such an update software storage unit 220 may be provided by, for example, the second non-volatile memory 202.

The capacity information acquisition unit 230 acquires capacity information indicating a free space of the working memory which is used as a work region for updating the target software. The capacity information acquisition unit 230 supplies the acquired capacity information to the division unit 240. The function of such a capacity information acquisition unit 230 may be provided by, for example, the second CPU 206 and a communication unit (not shown).

The division unit 240 divides the update software into a plurality of blocks such that each block is smaller than or equal to a free space of the working memory which is used as a work region for updating the target software. At this time, the division unit 240 may divide the update software into the plurality of blocks based on the capacity information. When the division unit 240 divides the update software into the plurality of blocks, it notifies the instruction unit 250 to that effect. The function of such a division unit 240 may be provided by, for example, the second CPU 206.

The instruction unit 250 instructs the CPU of the target device 100 to partially update the target software. The function of such an instruction unit 250 may be provided by, for example, the second CPU 206 and a communication unit (not shown).

The supply unit 260 supplies the update software to the working memory on a block-by-block basis. The function of such a supply unit 260 may be provided by, for example, the second CPU 206 and a communication unit (not shown).

The determination unit 270 determines whether a partial update of the target software by using an update target block among the plurality of blocks is completed. The function of such a determination unit 270 may be provided by, for example, the second CPU 206 and a communication unit (not shown). Then, when it is determined that the partial update of the target software by using the update target block is completed, the supply unit 260 supplies the working memory with a next update target block among the plurality of blocks.

A method in which the update assistance device 200 including such a functional unit assists in updating the target software in the target device 100, will be described in detail with reference to a flow diagram.

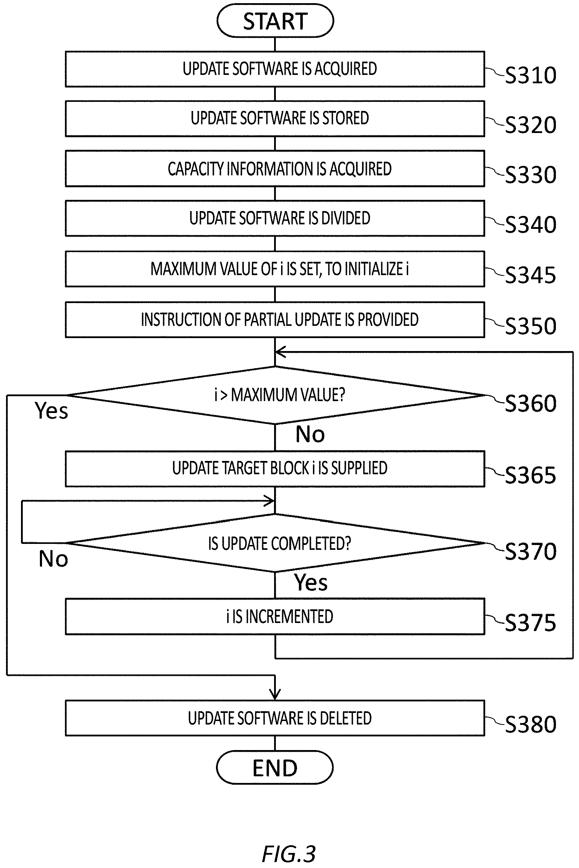

Fig. 3 shows an example of a flow diagram of an update assistance method which may be executed by the update assistance device 200 according to the present embodiment.

In step S310, the update assistance device 200 acquires the update software. For example, the update software acquisition unit 210 may acquire the update software via the computer network. More specifically, the update software acquisition unit 210 may access the computer network via the relay device 50, and download the update software for updating the target software that is executed in the target device 100. The update software acquisition unit 210 supplies the acquired update software to the update software storage unit 220.

In step S320, the update assistance device 200 stores the update software. For example, the update software storage unit 220 may store the update software acquired, in step S310, for updating the target software that is executed in the target device 100.

It should be noted that in the above description, the case is shown as an example in which the update software acquisition unit 210 acquires the update software via the computer network, and the update software storage unit 220 stores it; however, the present invention is not limited to this. When the update software is already stored in the update software storage unit 220, the update assistance device 200 may not execute the processing of step S310. In other words, the update assistance device 200 may not include the update software acquisition unit 210.

In step S330, the update assistance device 200 acquires the capacity information. For example, the capacity information acquisition unit 230 may acquire the capacity information indicating a free space of the working memory which is used as a work region for updating the target software. More specifically, the capacity information acquisition unit 230 may communicate with the first CPU 106 via the relay device 50, and acquire the capacity information indicating a free space of the first working memory 104. The capacity information acquisition unit 230 supplies the acquired capacity information to the division unit 240.

It should be noted that in the above description, the case is shown as an example in which the capacity information acquisition unit 230 communicates with the first CPU 106 to acquire the capacity information; however, the present invention is not limited to this. When a free space of the first working memory 104 is known, or when it can be estimated from known information, the update assistance device 200 may not execute the processing of step S330. In other words, the update assistance device 200 may not include the capacity information acquisition unit 230.

In step S340, the update assistance device 200 divides the update software. For example, the division unit 240 may divide the update software into a plurality of blocks such that each block is smaller than or equal to a free space of the working memory which is used as a work region for updating the target software. More specifically, the division unit 240 may divide the update software stored in step S320 into the plurality of blocks such that each block is smaller than or equal to a free space of the first working memory 104.

At this time, the division unit 240 may divide the update software into a plurality of blocks based on the capacity information acquired in step S330. As an example, a size of the update software stored in step S320 is set to be 600 MB. In addition, the capacity information acquired in step S330 is assumed to indicate that a free space of the first working memory 104 is 256 MB. In this case, the division unit 240 may divide the update software into total three blocks of a block 1 (200 MB), a block 2 (200 MB), and a block 3 (200 MB) such that each block is smaller than or equal to 256 MB.

It should be noted that in the above description, the case is shown as an example in which the division unit 240 divides the update software into a plurality of blocks such that each block has an equal size; however, the present invention is not limited to this. The division unit 240 may divide the update software into a plurality of blocks, such as dividing into total three blocks of a block 1 (256 MB), a block 2 (256 MB), and a block 3 (88 MB) such that at least one block has a maximum size that is smaller than or equal to a free space of the first working memory 104.

In step S345, the update assistance device 200 sets a maximum value of an index i of the blocks to initialize the index i. For example, the division unit 240 may set the maximum value of the index i to the number n of the blocks into which the update software is divided in step S340, and set index i = 1. As an example, when the update software is divided into three blocks, the division unit 240 may set the maximum value of the index i to 3 and set the index i = 1. The division unit 240 notifies the instruction unit 250 that the update software is divided into a plurality of blocks. At this time, the division unit 240 may notify the instruction unit 250 of the number n of the blocks into which the update software is divided.

In step S350, the update assistance device 200 provides an instruction of a partial update. For example, the instruction unit 250 may instruct the CPU of the target device 100 to partially update the target software. At this time, the instruction unit 250 may instruct the CPU of the target device 100 to write the update target block to the working memory. In addition, the instruction unit 250 may instruct the CPU of the target device 100 to update the target software by using the update target block supplied to the working memory. More specifically, the instruction unit 250 may communicate with the first CPU 106 via the relay device 50. Then, the instruction unit 250 may instruct the first CPU 106 to partially update the target software. At this time, the instruction unit 250 may notify the first CPU 106 of the number n of the blocks into which the update software is divided. This makes it possible for the update assistance device 200 to inform the target device 100 in advance of the number of the blocks into which the update software is divided for supplying. In addition, the instruction unit 250 may instruct the first CPU 106 to write, to the first working memory 104, the update target blocks into which the update software is divided. In addition, the instruction unit 250 may instruct the first CPU 106 to update the target software by using the update target block supplied to the first working memory 104.

In step S360, the update assistance device 200 determines whether the index i is greater than the maximum value. For example, the update assistance device 200 may determine whether the index i is greater than the number n of the blocks set to the maximum value of the index i in step S345. If it is determined that the index i is not greater than the number n of the blocks (No), the processing of the update assistance device 200 proceeds to step S365. As an example, if the index i = 1 and the number of the blocks n = 3, since i ≤ n, the processing of the update assistance device 200 may proceed to step S365.

In step S365, the update assistance device 200 supplies an update target block i. For example, the supply unit 260 may supply the update target block i to the working memory which is used as a work region for updating the target software. More specifically, when i = 1, the supply unit 260 may supply the block 1 to the first working memory 104 via the relay device 50. In this way, the supply unit 260 may supply the update software to the working memory on a block-by-block basis. In response to this, the first CPU 106 may write the block 1 supplied from the supply unit 260 to the first working memory 104. Next, the first CPU 106 may execute the update processing for the target software stored in the first non-volatile memory 102 by using the block 1 supplied to the first working memory 104. Then, when the update processing for the target software by using the block 1 is completed, the first CPU 106 may notify the second CPU 206 to that effect via the relay device 50.

In step S370, the update assistance device 200 determines whether the update is completed. For example, the determination unit 270 may determine whether a partial update of the target software, by using the update target block i among the plurality of blocks, is completed. More specifically, when i = 1, the determination unit 270 may determine whether a notification that the update processing for the target software is completed, is provided from the first CPU 106 via the relay device 50. If the notification that the update processing is completed is not provided, the determination unit 270 may determine that the partial update of the target software by using the block 1 is not completed (No). In this case, the determination unit 270 may repeat the processing of determining whether the partial update is completed. If the notification that the update processing is completed is provided, the determination unit 270 may determine that the partial update of the target software by using the block 1 is completed (Yes). In this case, the processing of the update assistance device 200 proceeds to step S375.

In step S375, the update assistance device 200 increments the index i. For example, the update assistance device 200 may set the index i = i + 1. More specifically, when i = 1, the update assistance device 200 may set i = 2. Then, the update assistance device 200 returns the processing to step S360 and continues the flow.

In step S360, if the index i = 2 and the number of the blocks n = 3, since i ≤ n, the processing of the update assistance device 200 may proceed to step S365. In step S365, when i = 2, the supply unit 260 may supply the block 2 to the first working memory 104 via the relay device 50. Then, in step S370, if the determination unit 270 determines that a partial update of the target software by using the block 2 is completed, the update assistance device 200 may set i = 3 in step S375. Then, the update assistance device 200 returns the processing to step S360 and continues the flow.

In step S360, if the index i = 3 and the number of the blocks n = 3, since i ≤ n, the processing of the update assistance device 200 may proceed to step S365. In step S365, when i = 3, the supply unit 260 may supply the block 3 to the first working memory 104 via the relay device 50. Then, in step S370, if the determination unit 270 determines that a partial update of the target software by using the block 3 is completed, the update assistance device 200 may set i = 4 in step S375. Then, the update assistance device 200 returns the processing to step S360 and continues the flow.

In this way, when it is determined that a partial update of the target software by using the update target block is completed, the supply unit 260 may supply the working memory with a next update target block among the plurality of blocks.

It should be noted that in the above description, the case is shown as an example in which in response to the determination unit 270 determining in step S370 that the notification that the update processing is completed, is provided from the first CPU 106, the supply unit 260 supplies a next update target block to the first working memory 104; however, the present invention is not limited to this. When an update processing time is known according to the size of the update target block, or when it can be estimated from known information, the update assistance device 200 may not execute the processing of step S370. In this case, the supply unit 260 may supply the next update target block to the first working memory 104, in response to expiration of the known or estimated update processing time. In other words, the update assistance device 200 may not include the determination unit 270.

In step S360, if the index i = 4 and the number of the blocks n = 3, since i > n, the processing of the update assistance device 200 may determine that the index i is greater than the number of the blocks n (Yes). In this case, the processing of the update assistance device 200 proceeds to step S380.

In step S380, the update assistance device 200 deletes the update software. For example, the update software storage unit 220 may delete the update software stored in step S320. Then, the update assistance device 200 ends the present flow. It should be noted that for example, when the update assistance device 200 is attachable and detachable to and from the relay device 50 and the update software is also able to be used to update the software that is stored inside another apparatus different from the apparatus 10, the update assistance device 200 may end the present flow without executing the processing of step S380.

The update assistance device 200 according to the present embodiment divides the update software into a plurality of blocks and supplies the update software to the working memory on a block-by-block basis, so that each block is smaller than or equal to a free space of the working memory which is used as a work region for updating the target software. In this manner, with the update assistance device 200 according to the present embodiment, even when a free space of the first non-volatile memory 102 or the first working memory 104 in the target device 100 is not sufficient, it is possible to assist in the update such that a partial update of the target software is able to be realized.

In addition, the update assistance device 200 according to the present embodiment determines whether a partial update of the target software by using the update target block is completed; and, when the update is determined to be completed, supplies a next update target block to the working memory. In this manner, with the update assistance device 200 according to the present embodiment, it is possible to prevent the next update target block from being supplied to the working memory before the update of the target software is completed.

In addition, the update assistance device 200 according to the present embodiment acquires the capacity information indicating a free space of the working memory, and divides the update software into a plurality of blocks based on the capacity information. In this manner, with the update assistance device 200 according to the present embodiment, the update software is divided into the plurality of blocks based on an actual free space of the working memory, and thus it is possible to reliably prevent each block from becoming greater than a free space of the working memory.

In addition, the update assistance device 200 according to the present embodiment instructs the CPU of the target device 100 to partially update the target software. In this manner, with the update assistance device 200 according to the present embodiment, it is possible to inform the first CPU 106 in the target device 100 that the target software is updated partially, instead of updating the target software all at once. In this manner, with the update assistance device 200 according to the present embodiment, it is possible to instruct the first CPU 106 in the target device 100 to write the update target block to the first working memory 104, or to update the target software by using the update target block supplied to the first working memory 104, and it is possible to cause the target device 100 to execute the processing intended by the update assistance device 200.

In addition, the update assistance device 200 according to the present embodiment acquires the update software via the computer network. In this manner, with the update assistance device 200 according to the present embodiment, in various environments where the computer network is able to be accessed, it is possible to acquire the update software.

In addition, there is provided a field apparatus including the update assistance device 200 according to the present embodiment. In such a field apparatus, the software that is stored therein needs to be updated comparatively frequently, and the capacity of the memory which is mounted is comparatively small, as is often the case. Accordingly, by applying the update assistance device 200 according to the present embodiment to such a highly compatible field apparatus, it is possible to exhibit more significant effect.

In addition, the field apparatus further includes the target device 100; and the relay device 50 to which the target device 100 and the update assistance device 200 are attached, and which relays a communication between the target device 100 and the update assistance device 200. In this manner, even in the existing field apparatus, by merely attaching the update assistance device 200 to the relay device 50, it is possible to extend the function such that a partial update of the target software is able to be realized. That is, it is possible to make a structure in which the update assistance device 200 is developed as a module, and then is able to be connected to the apparatus 10.

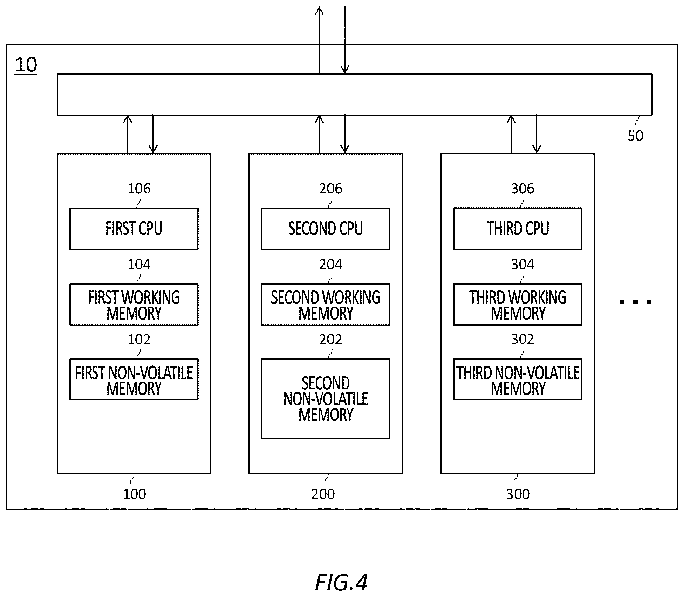

Fig. 4 shows a modified example of a configuration diagram of the apparatus 10 in which the update assistance device 200 according to the present embodiment may be used. In the present figure, the members having the same configurations as those in Fig. 1 are denoted by the same signs and numerals, and the descriptions thereof will be omitted except for the following differences. In the above description, the case is shown as an example in which the device on which the target software as an update target is executed is the target device 100 alone; however, the present figure describes a case in which there are a plurality of devices on which the target software as an update target is executed.

In the present figure, for convenience of description, the target device 100 is referred to as a first target device 100. The update assistance device 200 is also referred to as a second target device 200. That is, the update assistance device 200 functions as a device which assists in updating another target device, and also functions as a target device itself. In the present figure, the apparatus 10 further includes a third target device 300, in addition to the relay device 50, the first target device 100, and the update assistance device 200 (the second target device 200).

The third target device 300 is, similar to the first target device 100, a device on which the target software as an update target is executed. As an example, the third target device 300 may be a third board that is attached, in the attachable and detachable manner, to a third slot of the relay device 50 that is a base board. The third target device 300 includes a third non-volatile memory 302, a third working memory 304, and a third CPU 306.

The third non-volatile memory 302, the third working memory 304, and the third CPU 306 may be elements similar to the first non-volatile memory 102, the first working memory 104, and the first CPU 106, and thus the description will be omitted here except for the differences.

In the present figure, the total three devices of the first target device 100, the second target device 200, and the third target device 300, are devices on which the target software as an update target is executed. That is, the target software as an update target is stored in each of the first non-volatile memory 102 in the first target device 100, the second non-volatile memory 202 in the second target device 200, and the third non-volatile memory 302 in the third target device 300. The update assistance device 200 assists in updating the software in the first target device 100 and the third target device 300, and also updates the software that is stored in itself.

In such a case, the update software that is stored in the update software storage unit 220 may have a plurality of software regions for updating a plurality of pieces of target software that are stored in a plurality of target devices 100 to 300, respectively.

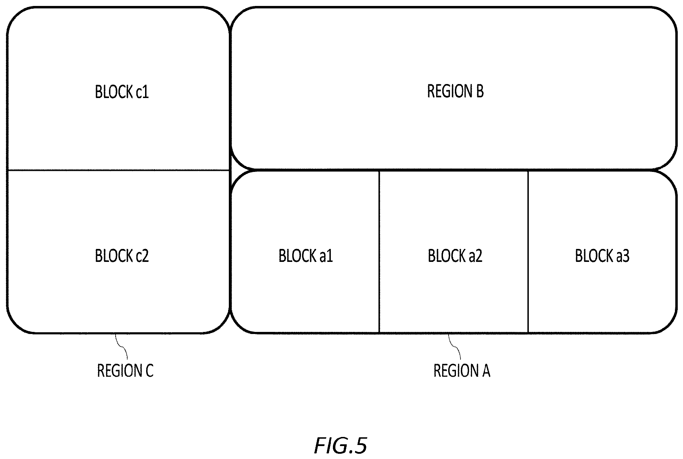

Fig. 5 shows an example of update software according to a modified example. The update software may have total three software regions of a region A, a region B, and a region C, as shown in the present figure, for example.

The region A is a software region for updating the target software that is stored in the first non-volatile memory 102 in the first target device 100. The division unit 240 may divide the region A into three blocks (a block a1, a block a2, and a block a3), similarly to that of the above-described flow, for example. Then, the supply unit 260 may supply an update target block ai to the first working memory 104 according to the index i, thereby supplying the first working memory 104, on a block-by-block basis, with the update software for updating the target software that is stored in the first non-volatile memory 102.

The region B is a software region for updating the target software that is stored in the second non-volatile memory 202 in the second target device 200. Here, when the second CPU 206 sets the second working memory 204 as a work region, and executes the update processing for the target software that is stored in the second non-volatile memory 202, a free space in the second working memory 204 is assumed to be sufficiently great. As an example, a size of the region B is set to be 600 MB and a free space of the second working memory 204 is set to be 1 GB. In this case, the second CPU 206 is able to use the second working memory 204 as a work region, and update the target software all at once. Accordingly, the division unit 240 may not divide the region B into a plurality of blocks. Then, the supply unit 260 may supply the second working memory 204 with the update software for the region B as is.

The region C is a software region for updating the target software that is stored in the third non-volatile memory 302 in the third target device 300. Here, when the third CPU 306 sets the third working memory 304 as a work region, and executes the update processing for the target software that is stored in the third non-volatile memory 302, a free space in the third working memory 304 is assumed to be insufficient. As an example, a size of region C is set to be 600 MB and a free space of the third working memory 304 is set to be 512 MB. In this case, the division unit 240 may divide region C into two blocks of a block c1 (300 MB) and a block c2 (300 MB). Then, the supply unit 260 may supply an update target block ci to the third working memory 304 according to the index i, thereby supplying the third working memory 304, on a block-by-block basis, with the update software for updating the target software that is stored in the third non-volatile memory 302.

In this manner, the update software may be software for updating a plurality of pieces of target software for which a plurality of working memories different from each other (for example, the first working memory 104, the second working memory 204, and the third working memory 304) are set as work regions, and which are respectively updated. In this case, the division unit 240 may divide the update software into the plurality of blocks such that each block is smaller than or equal to a free space of a corresponding working memory among the plurality of working memories. Then, the supply unit 260 may supply the update software to each of the corresponding working memories on a block-by-block basis.

In this manner, with the update assistance device 200 according to the present embodiment, by executing the dividing processing and the supplying processing on a block-by-block basis, on a region determined to be necessary in light of a free space of each of a plurality of working memories (for example, the first working memory 104, the second working memory 204, and the third working memory 304), it is possible to update the plurality of pieces of target software that are stored in the plurality of target devices 100 to 300 by using a single piece of update software.

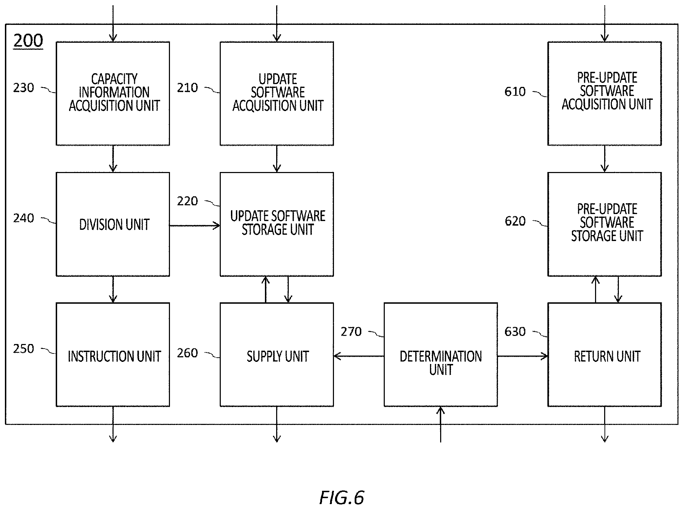

Fig. 6 shows an example of a block diagram of the update assistance device 200 according to another embodiment. In the present figure, the members having the same functions as those in Fig. 2 are denoted by the same signs and numerals, and the descriptions thereof will be omitted except for the following differences. The update assistance device 200 according to another embodiment further includes a pre-update software acquisition unit 610, a pre-update software storage unit 620, and a return unit 630, in addition to the function units included in the update assistance device 200 according to the embodiment described above.

The pre-update software acquisition unit 610 acquires, from the target device 100, pre-update software indicating the target software before the update. More specifically, before updating the target software, the pre-update software acquisition unit 610 may communicate with the first CPU 106 via the relay device 50, and acquire a copy of the target software that is stored in the first non-volatile memory 102, as the pre-update software. The pre-update software acquisition unit 610 supplies the acquired pre-update software to the pre-update software storage unit 620. The function of such a pre-update software acquisition unit 610 may be provided by, for example, the second CPU 206 and a communication unit (not shown).

The pre-update software storage unit 620 stores the pre-update software. More specifically, the pre-update software storage unit 620 may store a copy of the target software supplied from the pre-update software acquisition unit 610, as the pre-update software. The function of the pre-update software storage unit 620 may be provided by, for example, the second non-volatile memory 202.

The return unit 630 returns the pre-update software to the target device, when the update of the target software by using the update software is not successful. More specifically, the determination unit 270 may start a timer in which a predetermined period is set in response to the update target block i being supplied. Then, in a case where the notification that the update processing is completed is not provided from the first CPU 106, by the timer expires, the determination unit 270 may determine that the update of the target software is not successful. In this case, the determination unit 270 may notify the return unit 630 that the update of the target software is not successful. In response to this, the return unit 630 may access the pre-update software storage unit 620 and acquire the pre-update software that is stored. Then, the return unit 630 may communicate with the first CPU 106 via the relay device 50, and return the pre-update software to the target device 100. The function of such a return unit 630 may be provided by, for example, the second CPU 206 and a communication unit (not shown).

In this way, the update assistance device 200 of another embodiment acquires, from the target device 100, the pre-update software for storing; and returns the pre-update software to the target device 100 when the update of the target software is not successful. In this manner, with the update assistance device 200 according to another embodiment, before the update of the target software, the target software before the update is backed up in the device itself, and thus even when the update of the target software does not successfully end, it is possible to cause the target device 100 to restore the target software before the update in response to the return from the return unit 630.

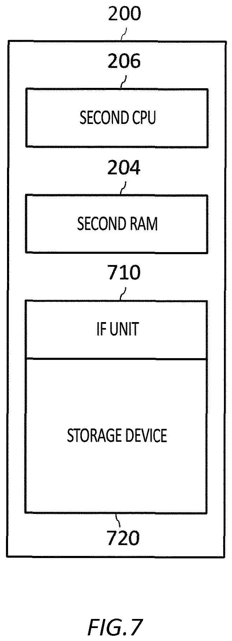

Fig. 7 shows another example of the configuration diagram of the update assistance device 200 according to the present embodiment. In the present figure, the members having the same configurations as those in Fig. 1 are denoted by the same signs and numerals, and the descriptions thereof will be omitted except for the following differences. In the above description, the case is shown as an example in which the update assistance device 200 includes the second non-volatile memory 202; however, in the present figure, the update assistance device 200 includes an interface unit 710 and a storage device 720, instead of or in addition to the second non-volatile memory 202.

The interface unit 710 is an input/output unit for connecting the storage device 720 to the update assistance device 200. For example, the interface unit 710 may be a port, a slot, a connector, or the like for connecting the storage device 720, in the attachable and detachable manner, to the update assistance device 200; and as an example, may be a USB port or an SD card slot.

The storage device 720 is a recording medium capable of storing data. For example, the storage device 720 may be a recording medium which is attached, in the attachable and detachable manner, to the update assistance device 200 via the interface unit 710 such that the data is able to be carried; and as an example, may be a USB memory or an SD card.

Such a storage device 720 may have the update software stored therein in advance. That is, the function of the update software storage unit 220 may be provided by the storage device 720 which is attachable and detachable. In this manner, with the update assistance device 200 according to the present embodiment, there is no need to separately download the update software, and thus even in an environment in which it is not possible to access the computer network, it is possible to assist in updating the target software, and it is possible to reduce a cost and a time for the download.

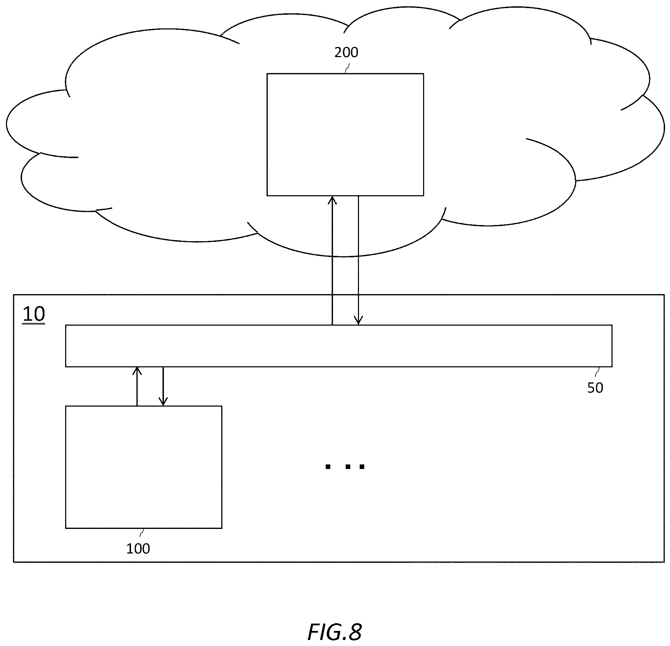

Fig. 8 shows an example of an update assistance system in which the update assistance device 200 according to the present embodiment may be used. In the present figure, the members having the same configurations as those in Fig. 1 are denoted by the same signs and numerals, and the descriptions thereof will be omitted except for the following differences. In the above description, the case is shown as an example in which the update assistance device 200 is built in the apparatus 10; however, in the present figure, the update assistance device 200 is provided on the cloud. That is, the update assistance device 200 may be a virtual board on the cloud.

In this case, the update assistance device 200 may be configured to be able to communicate with the target device 100 via the computer network and the relay device 50. Accordingly, the supply unit 260 may supply the update software on a block-by-block basis to the first working memory 104 in the target device 100 via the computer network. In this manner, with the update assistance device 200 according to the present embodiment, it is possible to assist in updating the target software in the target device 100 without the need to prepare a physical board. In addition, it is possible to update the plurality of target devices 100 built in a plurality of apparatuses 10, from the update assistance device 200 on the cloud, it is possible to perform the efficient update (in a concentrating manner).

Various embodiments of the present invention may be described with reference to flowcharts and block diagrams whose blocks may represent (1) steps of processes in which operations are performed or (2) sections of apparatuses responsible for performing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, a special purpose computer, or other programmable data processing devices, or to a programmable circuit, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

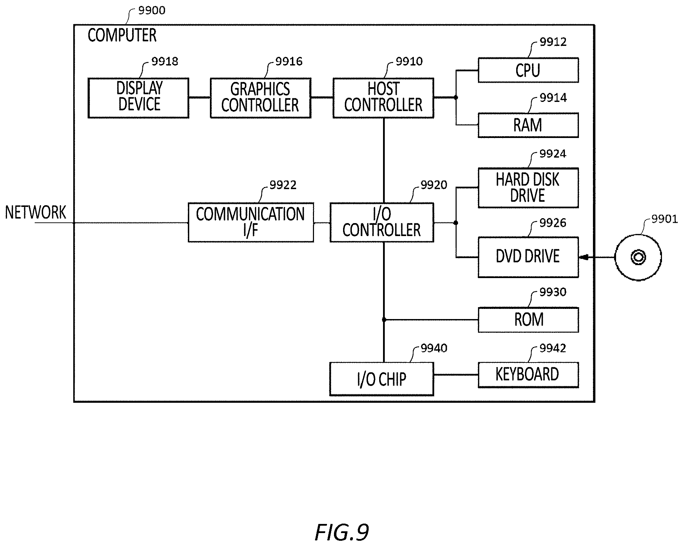

Fig. 9 shows an example of a computer 9900 in which a plurality of aspects of the present invention may be entirely or partially embodied. A program that is installed in the computer 9900 can cause the computer 9900 to function as operations associated with apparatuses according to the embodiments of the present invention or one or more sections of the apparatuses, or can cause the computer 9900 to execute the operations or the one or more sections thereof, and/or can cause the computer 9900 to execute processes according to the embodiments of the present invention or steps of the processes. Such a program may be executed by a CPU 9912 so as to cause the computer 9900 to execute certain operations associated with some or all of the flowcharts and the blocks in the block diagrams described herein.

The computer 9900 according to the present embodiment includes the CPU 9912, a RAM 9914, a graphics controller 9916, and a display device 9918, which are mutually connected by a host controller 9910. The computer 9900 further includes input/output units such as a communication interface 9922, a hard disk drive 9924, a DVD drive 9926, and an IC card drive, which are connected to the host controller 9910 via an input/output controller 9920. The computer also includes legacy input/output units such as a ROM 9930 and a keyboard 9942, which are connected to the input/output controller 9920 via an input/output chip 9940.

The CPU 9912 operates according to programs stored in the ROM 9930 and the RAM 9914, thereby controlling each unit. The graphics controller 9916 acquires image data generated by the CPU 9912 on a frame buffer or the like provided in the RAM 9914 or in itself, and causes the image data to be displayed on the display device 9918.

The communication interface 9922 communicates with other electronic devices via a network. The hard disk drive 9924 stores programs and data that are used by the CPU 9912 within the computer 9900. The DVD drive 9926 reads the programs or the data from a DVD-ROM 9901, and provides the hard disk drive 9924 with the programs or the data via the RAM 9914. The IC card drive reads the programs and the data from the IC card, and/or writes the programs and the data to the IC card.

The ROM 9930 stores therein a boot program or the like executed by the computer 9900 at the time of activation, and/or a program depending on the hardware of the computer 9900. The input/output chip 9940 may also connect various input/output units via a parallel port, a serial port, a keyboard port, a mouse port or the like to the input/output controller 9920.

A program is provided by a computer-readable medium such as the DVD-ROM 9901 or the IC card. The program is read from the computer-readable medium, installed into the hard disk drive 9924, the RAM 9914, or the ROM 9930, which are also examples of a computer-readable medium, and executed by the CPU 9912. The information processing written in these programs is read into the computer 9900, resulting in cooperation between a program and the above-mentioned various types of hardware resources. An apparatus or method may be constituted by realizing the operation or processing of information in accordance with the usage of the computer 9900.

For example, when a communication is performed between the computer 9900 and an external device, the CPU 9912 may execute a communication program loaded onto the RAM 9914 to instruct the communication interface 9922 to process the communication, based on the processing written in the communication program. The communication interface 9922, under control of the CPU 9912, reads transmission data stored on a transmission buffer region provided in a recording medium such as the RAM 9914, the hard disk drive 9924, the DVD-ROM 9901, or the IC card, and transmits the read transmission data to a network or writes reception data received from a network to a reception buffer region or the like provided on the recording medium.

Also, the CPU 9912 may cause all or a necessary portion of a file or a database to be read into the RAM 9914, wherein the file or the database has been stored in an external recording medium such as the hard disk drive 9924, the DVD drive 9926 (the DVD-ROM 9901), the IC card, etc., and perform various types of processing on the data on the RAM 9914. The CPU 9912 then writes back the processed data to the external recording medium.

Various types of information such as various types of programs, data, tables, and databases may be stored in a recording medium and subjected to information processing. The CPU 9912 may perform various types of processing on the data read from the RAM 9914, which includes various types of operations, information processing, condition judging, conditional branch, unconditional branch, search/replacement of information, etc., as described throughout the present disclosure and designated by an instruction sequence of programs, and writes the result back to the RAM 9914. Also, the CPU 9912 may search for information in a file, a database, etc., in the recording medium. For example, when a plurality of entries, each having an attribute value of a first attribute associated with an attribute value of a second attribute, are stored in the recording medium, the CPU 9912 may search for an entry matching the condition whose attribute value of the first attribute is designated, from among the plurality of entries, and read the attribute value of the second attribute stored in the entry, thereby acquiring the attribute value of the second attribute associated with the first attribute satisfying the predetermined condition.

The above-described program or software modules may be stored in the computer-readable medium on the computer 9900 or near the computer 9900. Also, a recording medium such as a hard disk or a RAM provided in a server system connected to a dedicated communication network or the Internet can be used as the computer-readable medium, thereby providing the program to the computer 9900 via the network.

While the present invention has been described by way of the embodiments, the technical scope of the present invention is not limited to the above-described embodiments. It is apparent to persons skilled in the art that various alterations or improvements can be made to the above described embodiments. It is also apparent from the described scope of the claims that the embodiments added with such alterations or improvements can be included the technical scope of the present invention.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

### EXPLANATION OF REFERENCES

10: apparatus; 50: relay device; 100: target device (first target device); 102: first non-volatile memory; 104: first working memory; 106: first CPU; 200: update assistance device (second target device); 202: second non-volatile memory; 204: second working memory; 206: second CPU; 210: update software acquisition unit; 220: update software storage unit; 230: capacity information acquisition unit; 240: division unit; 250: instruction unit; 260: supply unit; 270: determination unit; 300: third target device; 302: third non-volatile memory; 304: third working memory; 306: third CPU; 610: pre-update software acquisition unit; 620: pre-update software storage unit; 630: return unit; 710: interface unit; 720: storage device; 9900: computer; 9901 DVD-ROM; 9910: host controller; 9912: CPU; 9914: RAM; 9916: graphics controller; 9918: display device; 9920: input/output controller; 9922: communication interface; 9924: hard disk drive; 9926: DVD drive; 9930: ROM; 9940: input/output chip; 9942: keyboard.

## Claims

1. An update assistance device comprising:
an update software storage unit which stores update software for updating target software that is executed in a target device;
a division unit which divides the update software into a plurality of blocks such that each block is smaller than or equal to a free space of a working memory which is used as a work region for updating the target software; and
a supply unit which supplies the update software to the working memory on a block-by-block basis.

2. The update assistance device according to claim 1, further comprising:
a determination unit which determines whether a partial update of the target software by using an update target block among the plurality of blocks is completed, wherein
when it is determined that the partial update of the target software by using the update target block is completed, the supply unit supplies the working memory with a next update target block among the plurality of blocks.

3. The update assistance device according to claim 1, further comprising:
a capacity information acquisition unit which acquires capacity information indicating a free space of the working memory, wherein
the division unit divides the update software into the plurality of blocks based on the capacity information.

4. The update assistance device according to claim 1, wherein
the target device includes a non-volatile memory which stores the target software, the working memory, and a CPU which executes update processing for the target software,
the update assistance device further comprising an instruction unit which instructs the CPU of the target device to partially update the target software.

5. The update assistance device according to claim 4, wherein the instruction unit instructs the CPU of the target device to write an update target block to the working memory.

6. The update assistance device according to claim 4, wherein the instruction unit instructs the CPU of the target device to update the target software by using an update target block supplied to the working memory.

7. The update assistance device according to claim 1, wherein
the update software is software for updating a plurality of pieces of target software for which a plurality of working memories different from each other are set as work regions, and which are respectively updated,
the division unit divides the update software into the plurality of blocks such that each block is smaller than or equal to a free space of a corresponding working memory among the plurality of working memories, and
the supply unit supplies the update software to each of the corresponding working memories on a block-by-block basis.

8. The update assistance device according to claim 1, further comprising:
a pre-update software acquisition unit which acquires, from the target device, pre-update software indicating the target software before the update;
a pre-update software storage unit which stores the pre-update software; and
a return unit which returns the pre-update software to the target device, when the update of the target software by using the update software is not successful.

9. The update assistance device according to any one of claims 1 to 8, further comprising an update software acquisition unit which acquires the update software via a computer network.

10. The update assistance device according to any one of claims 1 to 8, wherein a function of the update software storage unit is provided by a storage device which is attachable and detachable.

11. The update assistance device according to any one of claims 1 to 8, wherein the supply unit supplies the update software to the working memory via a computer network.

12. A field apparatus comprising the update assistance device according to any one of claims 1 to 8.

13. The field apparatus according to claim 12, further comprising:
the target device; and
a relay device to which the target device and the update assistance device are attached, and which relays a communication between the target device and the update assistance device.

14. An update assistance method comprising: by a computer,
storing update software for updating target software that is executed in a target device;
dividing the update software into a plurality of blocks such that each block is smaller than or equal to a free space of a working memory which is used as a work region for updating the target software; and
supplying the update software to the working memory on a block-by-block basis.

15. An update assistance program which, when executed by a computer, causes the computer to function as:
an update software storage unit which stores update software for updating target software that is executed in a target device;
a division unit which divides the update software into a plurality of blocks such that each block is smaller than or equal to a free space of a working memory which is used as a work region for updating the target software; and
a supply unit which supplies the update software to the working memory on a block-by-block basis.
